(19) Europäisches Patentamt
European Patent Office
Office européen des brevets

(11) **EP 0 333 454 B1**

(12) **EUROPEAN PATENT SPECIFICATION**

(45) Date of publication and mention
of the grant of the patent:
**03.06.1998 Bulletin 1998/23**

(51) Int Cl.6: **C08G 63/20**, C08G 63/78,
C08G 18/42

(21) Application number: **89302545.2**

(22) Date of filing: **15.03.1989**

(54) **Manufacture of block polyester polyols and polyurethanes derived therefrom**

Herstellung von Block-Polyesterpolyolen und daraus abgeleiteten Polyurethanen

Préparation de polyesterpolyols en blocs et de polyuréthanes dérivés de ceux-ci

(84) Designated Contracting States:
**BE DE FR GB IT**

(30) Priority: **15.03.1988 US 168497**
**28.03.1988 GB 8807344**

(43) Date of publication of application:
**20.09.1989 Bulletin 1989/38**

(73) Proprietor: **HERCULES INCORPORATED**
**Wilmington Delaware 19894-0001 (US)**

(72) Inventor: **Altounian, Georges Napoleon**
**Quebec Canada G1Y 1Y8 (CA)**

(74) Representative: **Harrison, David Christopher et al**
**MEWBURN ELLIS**
**York House**
**23 Kingsway**
**London WC2B 6HP (GB)**

(56) References cited:
**EP-A- 0 128 060**        **EP-A- 0 161 039**

Remarks:
The file contains technical information submitted after the application was filed and not included in this specification

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

**Description**

The present invention relates to a method for the manufacture of block polyester polyols, especially polyester polyols in which tetrahydric alcohols are not used in the manufacturing process and ethylene glycol is preferably not used in the manufacturing process, and to polyurethanes obtained from such block polyester polyols. In particular, the invention relates to a method for the manufacture of polyester polyols from aliphatic polycarboxylic acids and polyhydric alcohols in which the acids and alcohols are of similar molecular weight, and especially a method in which the block polyester polyols are formed by reaction of a dicarboxylic acid with a mixture of secondary dihydric alcohols and a primary trihydric alcohol, and then by reaction of the resultant product with additional primary trihydric alcohol.

Methods are known for the manufacture of polyester polyols by reacting polycarboxylic acids, or esters or anhydrides thereof, with polyhydric alcohols in the presence of catalysts. Typical reaction times are stated to vary in the range of from 12 to 16 hours at temperatures of 130 to 240°C. A wide variety of carboxylic acids and polyhydric alcohols may be used, as is discussed in U.S. Patents 4 525 574 and 4 716 213, both of G.N. Altounian, which issued 1985 June 25 and 1987 December 29, respectively.

The manufacture of polyester polyols from a mixture of 73.1 parts of adipic acid, 54.8 parts of a diol mixture of 21% by weight of 1,4-butanediol, 52% by weight of 1,5-pentanediol and 27% by weight of 1,6-hexanediol, and 2.95 parts of trimethylol propane by esterification at normal pressure and at temperatures of up to 210°C is disclosed in Example 1 of U.S. Patent 4 362 825 of H. Grabhoefer et al, which issued 1982 December 07. The patent is directed to the manufacture of polyisocyanates from liquid polyester polyols having hydroxyl numbers of 40 to 80 and molecular weights of 1500 to 5000.

Polyesters that have hydroxyl groups and include reaction products of polyhydric, preferably dihydric and optionally trihydric alcohols, with polyvalent, preferably divalent, carboxylic acids are disclosed in U.S. Patent 4 608 413 of K. Nachtkamp et al, which issued 1986 August 26. The polyesters are used in stoving lacquers.

A polyester polyol having an acid number of about 7 and formed from 1248g of neopentyl glycol, 295g of trimethylol propane and 2331g of azelaic acid (1,7-heptanedicarboxylic acid i.e. 1,9-nonanedioic acid) is disclosed in Example 5 of U.S. Patent 4 255 541 of J.A. Simms, which issued 1981 March 10.

R.H. Blanpied discloses in U.S. Patent 4 400 477, which issued 1983 August 23, that polyester polyols formed from mixtures of aliphatic and aromatic carboxylic acids had superior miscibility with fluorotrichloromethane than did polyester polyols formed from only aliphatic carboxylic acids.

U.S. Patent 3 888 908 of J.M. Cross, which issued 1975 June 10, discloses polyester glycols formed from dicarboxylic acids, dicarboxylic acid anhydrides, dihydric alcohols and trihydric alcohols. The anhydrides are exemplified by phthalic acid anhydride and isophthalic acid anhydride.

Published Japanese patent application 61-026612 of Kuraray KK, published 1986 February 05, discloses mixed polyols formed from 3-methyl-1,5-pentanediol, polypropylene glycol and adipic or azelaic acid, and chain extended with ethylene glycol or butanediol.

Canadian Patent 1 129 598 of W. Jarre et al, which issued 1982 August 10, discloses polyester polyols manufactured from dicarboxylic acids, preferably aliphatic acids having 2 to 12 carbon atoms, and di- and multifunctional alcohols, preferably ethylene glycol and diethylene glycol. It is also disclosed that alkanolamines e.g. triethanolamine and triisopropanolamine, may be used as multifunctional alcohols.

Polyester polyols derived from butane-1,3-diol, at least one aliphatic polyhydroxy compound containing four hydroxy groups e.g. pentaerythritol, and adipic and/or glutaric acid is disclosed in U.K. patent specification No. 882 603 of Imperial Chemical Industries Limited, published 1961 November 15.

A process for the manufacture of a polyester polyol is described in GB 2 021 602A of A.G. Corry, published 1979 December 05. The process comprises reacting an organic polyol with a lower alkyl ester of a polycarboxylic acid and removing lower alkanol from the reaction mixture as it is formed and, towards the end of the reaction, adding an organic polyol or a polycarboxylic acid to the reaction mixture and then continuing the reaction. Other processes for the preparation of polyester polyols are described in Canadian Patent 1 059 529 of H.C. Vogt et al, which issued 1979 July 31.

A process for the preparation of block polyester polyols in the presence of N-phenyl dialkanolamines is disclosed in a U.S. Patent No. 4 789 719 of G.N. Altounian, which issued 1988 December 06.

EP-A-128 060 corresponds to U.S. Patents 4 525 574 and 4 716 213 mentioned above but contains additional material. It discloses a two-step method of making polyester polyols which is broadly analogous to that of the present invention, but the components used include triethanolamine and in some examples pentaerythritol.

It has now been found that block polyester polyols may also be formed from carboxylic acids and polyhydric alcohols of substantially the same molecular weight, in the absence of tetrahydric alcohols so that hydroxyl in the polyester polyols are not sterically hindered, in the absence of N-phenyl dialkanolamines and in the absence of primary trihydric alcohols other than trimethylolpropane.

Accordingly, the present invention provides a method for the manufacture of polyester polyols including:

(a) feeding to a reactor (I) at least one aliphatic dicarboxylic acid having 4 to 10 carbon atoms, or esters thereof, (ii) at least one secondary dihydric alcohol having 4 to 8 carbon atoms, and (iii) as trihydric alcohol trimethylolpropane having 4 to 14 carbon atoms and optionally a primary dihydric alcohol;

(b) heating the mixture obtained in (a) in said reactor in the substantial absence of oxygen and removing water or alcohol formed in the resultant esterification reaction;

(c) when the amount of water removed from the reaction mixture of (b) is at least 95% of the stoichiometric amount for the esterification, cooling the resultant reaction mixture to a temperature of less than 140°C and adding as primary trihydric alcohol trimethylolpropane and optionally a primary dihydric alcohol, the total amount of dihydric alcohols and trihydric alcohol being greater than the amount of acid on the basis of equivalents, the range of the molecular weights of said trihydric alcohol and of the acid, dihydric alcohols and trihydric alcohol of (a) and (c) being not more than 100; and

(d) further heating the reaction mixture and removing water or alcohol to obtain a polyester polyol having a hydroxyl number of less than 650, an acid value of less than 3.5 and a hydroxyl functionality of at least 2.0, with the provisos that the primary dihydric alcohol is added in at least one of steps (a) and (c);

that the method is carried out in the absence of tetrahydric alcohols so that hydroxyl end groups of the polyester polyols are not sterically hindered; that the method is carried out in the absence of N-phenyl dialkanolamines; and that the sole primary trihydric alcohol employed in the method is trimethylolpropane.

There may be up to one mole, per mole of acid, of at least one secondary dihydric alcohol having 4 to 8 carbon atoms, and 0.05 to 0.65 moles, per mole of acid, of the trimethylolpropane in step (a) and in step (c) an additional 0.10 to 0.70 moles, per mole of acid, of trimethylolpropane.

In further embodiments, the secondary dihydric alcohol is dipropylene glycol, and the acid is adipic acid, and the primary dihydric alcohol is cyclohexane dimethanol.

In other embodiments, the polyester polyol is characterized by having substantially the same reactivity to diphenylmethane-4,4'-diisocyanate at each end of the polyol molecule.

In the process, at least one aliphatic acid, at least one secondary dihydric alcohol and at least one primary trihydric alcohol are fed to a reactor, heated with the water that is the by-product of the resultant esterification reaction being removed, and then additional primary trihydric alcohol is added. A primary dihydric alcohol is also fed to the reactor, especially with the feeding of the additional primary trihydric alcohol to the reactor.

Tetrahydric alcohols are not fed to the reactor, because the resultant polyester polyol tends to have bulky or sterically hindered hydroxyl end groups and thus reduced reactivity in the formation of polyurethanes. Such polyurethanes would normally require a post-curing step in order to obtain acceptable properties. Low molecular weight primary dihydric alcohols are preferably not fed to the reactor, as is discussed herein.

The aliphatic carboxylic acid has 4 to 10 carbon atoms. Examples of such acids are succinic acid (1,4-butanedioic acid), glutaric acid (1,5-pentanedioic acid), adipic acid (1,6-hexanedioic acid), pimelic acid (1,7-heptanedioic acid), suberic acid (1,8-octanedioic acid), azelaic acid (1,9-nonanedioic acid) and sebacic acid (1,10-decanedioic acid). Mixtures of such acids may be used. The preferred acid is adipic acid. The acids may be in the form of the ester e.g. lower alkyl esters and especially methyl or ethyl esters.

The dihydric alcohol fed to the reactor has 4 to 10 carbon atoms, examples of which are diethylene glycol, dipropylene glycol, cyclohexane dimethanol, 1,4-butanediol, triethylene glycol, polytetramethylene ether glycol, 1,6-hexanediol, neopentyl glycol and dibromo neopentyl glycol. The dihydric alcohol fed to the reactor may be a mixture of such alcohols. The preferred secondary dihydric alcohol is dipropylene glycol and the preferred primary dihydric alcohol, if present, is cyclohexane dimethanol. The primary trihydric alcohol is trimethylol propane.

The aliphatic carboxylic acid, secondary dihydric alcohol and primary trihydric alcohol are selected so that the molecular weights of those compounds as fed to the reactor have a range of not more than 100. The preferred range of molecular weights is not more than 50.

The use of compounds having a narrow range of molecular weights in the method of the present invention has at least two advantages. For instance, the absence of compounds of substantially lower molecular weight, especially glycols, reduces the potential loss of such compounds from the reactor e.g. with the removal of water produced in the esterification reaction, and a consequent need to either add additional amounts of the low molecular weight compounds during the reaction or a need to add extra amounts at the start of the reaction to compensate for the loss during the reaction. In addition, there is a reduced tendency for transesterification reactions to occur, which tend to increase the reaction time required to achieve a predetermined amount of reaction. The polyester polyols of the invention tend to have a uniform molecular weight distribution and to form polyurethanes of more uniform properties. As is illustrated hereinafter, polyester polyols having hydroxyl numbers close to the theoretical values are readily obtainable, and are obtainable in a reproducible manner.

The acid, dihydric alcohol and trihydric alcohol are fed to a reactor and heated in the substantial absence of oxygen. Catalysts for esterification reactions are usually also added, examples of which are stannous and stannic chloride and alkyl tin compounds. As the esterification reaction to form the polyester polyol occurs, the by-product water is formed. In order to facilitate the reaction, it is important to remove the water from the reactor, thereby driving the reaction towards completion. Several methods may be used to remove water. For instance, a vacuum may be applied to the reactor or an inert gas e.g. nitrogen, may be fed to the reactor so that water is removed from the reactor as it is liberated in the reaction. Alternatively, an inert low boiling material may be added on a continuous or intermittent basis, especially such a material that forms an azeotrope with water; formation of an azeotrope would permit separation of water from the material outside of the reactor and reintroduction i.e. recycling, of the material into the reactor.

The amount of water removed from the reactor is monitored, as it is a measure of the extent of reaction inside the reactor. When the amount of water removed has reached at least 95% of the stoichiometric amount for the esterification reaction forming the polyester polyol, and especially at least 97% of the stoichiometric amount, then the additional trihydric alcohol is added to the reactor. The reaction is then continued until the desired degree of reaction has occurred.

Using the process of the present invention, reaction times for the manufacture of the polyol may be in the range of 5 to 10 hours, especially approximately 6-7 hours, depending in part on the rate of heating of the reactor.

The amounts of acid, and di- and trihydric alcohols fed to the reactor may be varied. However, the amount of acid, expressed as equivalents of acid, is less than the combined amount of di- and trihydric alcohols, expressed as equivalents of hydroxy groups. In embodiments, the amount of secondary dihydric alcohol added may up to the amount of acid, on a molar basis, especially in the range of 0.4 to 0.85 moles and preferably 0.45 to 0.60 moles, per mole of acid. Similarly, the trimethylolpropane added in step (a) of the reaction is preferably in the range of 0.05 to 0.65 moles and especially 0.3 to 0.5 moles, per mole of acid, and the amount of trimethylolpropane added in step (c) is preferably 0.10 to 0.70 moles and especially 0.5 to 0.65 moles, per mole of acid. The amount of primary dihydric alcohol added in step (a) may be from 0 to one mole, per mole of acid, and if used is preferably in the range of 0.2 to 0.4 moles per mole of acid. The amount of primary dihydric alcohol added in step (c) may be from 0 mole to 0.35 moles, and especially 0.15 to 0.25 moles, per mole of acid.

The total amount of alcohols is preferably at least 1.2 moles per mole of acid and more especially 1.8 to 2.2 moles per mole of acid. It will be appreciated that the ratio of the total amount of alcohols to acid will have significant affects on the properties of polyurethanes formed from the polyester polyol.

As noted above, N-phenyl dialkanolamine is not added to the process of the present invention.

The polyester polyols of the invention are liquids at ambient temperatures, which facilitates handling of the polyester polyols in subsequent end uses. In addition the polyester polyols, and hence products made therefrom, tend to have good hydrolytic stability. The block nature of the polyester polyol separates so-called hard segments from so-called soft segments, and tends to result in improvements in tensile strength, flexural strength and impact strength of products derived from the polyester polyols of the invention. The reactive groups of the polyester polyol are at the ends of the molecule, usually a hydroxyl group at one end and two hydroxyl groups at the other end. Thus, reactions e.g. the formation of polyurethanes and especially cross-linking reactions in the formation of polyurethanes, occur at the ends of the molecule, thereby tending to increase tensile strength, elongation and impact strength of resultant products. The relatively symmetrical nature of the polyester polyol facilitates hydrogen bonding and improves heat distortion temperatures of polyurethanes. The use of secondary alcohols tends to decrease the rate of reaction of alcohol groups with isocyanate groups, which facilitates control of the formation of the polyurethane e.g. gel times may readily be controlled in the range of a few seconds to several minutes. The result is that unitary large polyurethane parts weighing up to 100 or more kilograms may be manufactured. In addition, the polyester polyols are compatible with gaseous fluorocarbon blowing agents, which may therefore be introduced into polyurethane reactions in the polyol e.g. polyester polyol containing blowing agent may be manufactured and shipped as a commercial entity to a manufacturer of polyurethanes, whereas polyester polyols usually are incompatible with such blowing agents.

As noted above, the polyester polyols obtained by the method of the present invention may be used in the manufacture of polyurethanes, including foamed polyurethanes. Examples of the blowing agents include fluorotrichloromethane, dichlorodifluoromethane, chlorodifluoromethane and trichlorotrifluoroethane, including the fluorocarbon blowing agents that are being developed as replacements for chlorofluorocarbon blowing agents. As also noted above, such fluorocarbons may dissolve in the polyester polyol, which may eliminate any need for separate addition of blowing agent to the polyurethane as is standard practice in the industry.

Polyurethanes may be formed using aliphatic or aromatic isocyanates, or polyisocyanurate. Examples of aliphatic isocyanates include isophorone diisocyanate, hexamethylene diisocyanate and adducts of hexamethylene diisocyanate. Examples of aromatic diisocyanates include phenylene-1,3- and 1,4-diisocyanate, diphenylmethane-4,4'-diisocyanate, triphenyl-4,4',4''-triisocyanate and polyphenyl-polymethylene-polyisocyanate. The polyester polyol and isocyanate are used in ratios of 0.5 to 4:1 by weight.

In the manufacture of polyurethanes, especially rigid polyurethanes, cross-linking agents and extenders are added to the reaction mixture used to form the polyurethane. Examples of such cross-linking agents are tetrahydric alcohols, sorbitols and trihydric alcohols. Examples of extenders include 1,4-butanediol, ethylene glycol and primary diamines. However, in the manufacture of polyurethanes using the polyester polyols, it is often not necessary to add cross-linking agents because of the particular structure of the polyester polyol and the resultant properties of polyurethanes derived therefrom.

Polyurethanes are manufactured from an isocyanate and a polyol. A typical isocyanate.is diphenyl methane 4,4'-diisocyanate. It is known to react that isocyanate with an aromatic unsaturated polyester polyol that contains a vinylic monomer e.g. styrene, methyl methacrylate, and to use the unsaturation in subsequent cross-linking of the polyurethane. Such polyurethanes containing 40% by weight of long strand continuous non-knitted glass fibre e.g. Owens Corning OCF 8608X4 glass fibre, may have a flexural modulus of about 8.3 GPa (1 200 000 psi) and exhibit shrinking when moulded, which adversely affects the finish attainable on the moulded article. Alternatively, the polyol may be a polyether polyol and cross-linking may be achieved by the use of a trifunctional isocyanate. At a 60% loading of long strand continuous non-knitted glass fibre, a flexural modulus of 12.45 GPa (1 800 000 psi) is attainable, compared with a flexural modulus of about 2.4 GPa (350 000 psi) when unfilled. Both of the above types of polyurethanes tend to be brittle at low temperatures.

Polyurethanes formed from the polyester polyols of the present invention using the above isocyanate have a flexural modulus of 1.0 GPa (150 000) to 1.4 GPa (200 000 psi) when unfilled with glass fibre, but when filled at a 60% level with long strand continuous non-knitted glass fibre, the flexural modulus may be up to 15.5 GPa (2 250 000 psi). Thus, the polyester polyol of the invention appears to exhibit good wet out of the glass fibre. In addition, the filled polyurethanes exhibit relatively low shrinkage and produce moulded articles with excellent finish.

The polyester polyols manufactured by the method of the present invention may be used, in particular, in the manufacture of polyurethanes. The polyurethanes may be intended for use in a variety of end uses e.g. as foams or as structural parts.

As used herein, "acid value" is the number of milligrams of potassium hydroxide required to neutralize one gram of a sample of the polyester polyol. "Hydroxyl number" is a measure of the equivalent weight of the polyester polyol. "Functionality" is a measure of the number of free hydroxyl groups in the polyester polyol.

The present invention is illustrated by the following examples.

Preparation of Polyester Polyols:

Example I

The polyester polyols were prepared in a reactor comprising a 12 litre flask equipped with a mechanical stirrer and three inlets. The latter were used to feed an inert gas viz. nitrogen, and reactants to the reactor. The reactor was also equipped with a condenser to recover water passing from the reactor and means to heat the reactor.

The following were introduced into the reactor: 3853g of adipic acid, 2937g of dipropylene glycol, 1415g of trimethylol propane, 5g of dibutyl tin oxide and 2g of ethyl-hexyl titanate. The resultant mixture was heated under an inert atmosphere (nitrogen) and stirred. When the temperature of the reaction mixture reached about 156°C, water started to distill from the reactor; heating was continued until the temperature reached 180°C. When about 97% of the water has been distilled off, i.e. 566.6g, the reactor was cooled to 130°C, while maintaining the reaction mixture under inert atmosphere. 759g of cyclohexane dimethanol and 2052g of trimethylol propane were then added to the reactor, which was then re-heated. When the temperature had reached about 160°C, and the theoretical amount of water had been removed, the acid value of the polyester polyol was monitored about every thirty minutes, until the acid value had reached 0.5. The hydroxyl number was then measured. When the polyester polyol had reached both the desired acid value and hydroxyl number, the reactor was cooled down to 130°C and the resultant polyester polyol was removed from the reactor.

The polyester polyol thus obtained had a functionality of 3.0, a hydroxyl number of 455 (2.4% higher than the theoretical number) and an acid value of 0.4. The Brookfield viscosity at 25°C was 5430 mPas [centipoise (cps)] and at 60°C was 368 mPas (cps). The reaction time was 7.0 hours. The amount of dihydric alcohol lost in the distillate during the reaction was 1.65% of the dihydric alcohol.

Preparation of Composite Structures

Example II

A polyurethane was prepared from the polyester polyol of Example I and hexamethylene diisocyanate adduct (a trimer of hexamethylene diisocyanate obtained from Rhone Poulenc under the trade name Tolonate HDT™)

| Component B | % by weight |
|---|---|
| polyester polyol | 87.904 |

(continued)

| Component B | % by weight |
|---|---|
| anti-foaming agent (BYK-500™) | 0.071 |
| titanium dioxide | 12.000 |
| dibutyl tin dilaurate | 0.010 |
| phosphorus oxytrichloride | 0.015 |
| | 100.00 |

| Component A | |
|---|---|
| hexamethylene diisocyanate adduct | 125 parts/100 parts of Component B. |

The polyurethane obtained had a gel time of 4 minutes when the Component B was at 60°C and Component A was at 46°C. The Shore D (Gardner) hardness was 78.

Example III

A polyurethane was prepared from the polyester polyol of Example I and hexamethylene diisocyanate adduct (a trimer of hexamethylene diisocyanate obtained from Rhone Poulenc under the trade name Tolonate HDT™)

| Component B | % by weight |
|---|---|
| polyester polyol | 87.919 |
| anti-foaming agent (BYK-500™) | 0.071 |
| titanium dioxide | 12.000 |
| dibutyl tin dilaurate | 0.010 |
| | 100.00 |

| Component A | |
|---|---|
| hexamethylene diisocyanate adduct | 125 parts/100 parts of Component B. |

The polyurethane obtained had a gel time of 2.25 minutes when the Component B was at 60°C and Component A was at 46°C. The Shore D (Gardner) hardness was 75-78.

The polyurethane was tested in a Weather-O-Meter using a xenon lamp. After continuous exposure to irradiation for a period of 1000 hours, the samples showed no evidence of attack by ultra violet light (ASTM procedure G-26) and no change in colour (ASTM procedure E-805).

## Claims

1. A method for the manufacture of polyester polyols including

(a) feeding to a reactor (i) at least one aliphatic dicarboxylic acid having 4 to 10 carbon atoms, or ester thereof, (ii) at least one secondary dihydric alcohol having 4 to 8 carbon atoms, (iii) as primary trihydric alcohol trimethylolpropane and optionally (iv) a primary dihydric alcohol;
(b) heating the mixture obtained in (a) in said reactor in the substantial absence of oxygen and removing water or alcohol formed in the resultant esterification reaction;
(c) when the amount of water or alcohol removed from the reaction mixture of (b) is at least 95% of the stoichiometric amount for the esterification, cooling the resultant reaction mixture to a temperature of less than 140°C and adding as primary trihydric alcohol trimethylolpropane and optionally a primary dihydric alcohol, the total amount of dihydric alcohols and trihydric alcohol being greater than the amount of acid on the basis of equivalents, the range of the molecular weights of said acid, dihydric alcohols and trihydric alcohol of (a) and (c) being not more than 100; and

(d) further heating the reaction mixture and removing water or alcohol to obtain a polyester polyol having a hydroxyl number of less than 650, an acid value of less than 3.5 and a hydroxyl functionality of at least 2.0 with the provisos that the primary dihydric alcohol is added in at least one of steps (a) and (c); that the method is carried out in the absence of tetrahydric alcohols so that hydroxyl end groups in the polyester polyol are not sterically hindered; that the method is carried out in the absence of N-phenyl dialkanolamines; and that the sole primary trihydric alcohol employed in the method is trimethylolpropane.

2. A method for the manufacture of polyester polyols according to claim 1 including in step (a) feeding to the reactor up to one mole, per mole of acid, of the at least one secondary dihydric alcohol and 0.05 to 0.65 moles, per mole of acid of trimethylolpropane; and in step (c) adding 0.10 to 0.70 moles, per mole of acid, of trimethylolpropane.

3. The method of claim 1 or claim 2 in which the range of molecular weights is not more than 50.

4. The method of any one of claims 1-3 in which the secondary dihydric alcohol is dipropylene glycol, and the acid is adipic acid.

5. The method of any one of claims 1-4 in which the polyester polyol is characterized by having substantially the same reactivity to diphenylmethane-4,4'-diisocyanate at each end of the polyester polyol molecule.

6. The method of any one of claims 1-5 wherein the primary dihydric alcohol is cyclohexane dimethanol.

7. Method of manufacturing a polyurethane including manufacturing a polyester polyol by a method according to any one of the preceding claims and then reacting the polyester polyol with an isocyanate or polyisocyanurate.

**Patentansprüche**

1. Verfahren zur Herstellung von Polyesterpolyolen, umfassend:

(a) Speisen eines Reaktors mit (i) zumindest einer aliphatischen Dicarbonsäure mit 4 bis 10 Kohlenstoffatomen oder einem Ester davon, (ii) zumindest einem sekundären zweiwertigen Alkohol mit 4 bis 8 Kohlenstoffatomen, (iii) Trimethylolpropan als primärem dreiwertigem Alkohol und gegebenenfalls (iv) einem primären zweiwertigen Alkohol;
(b) Erhitzen des unter (a) erhaltenen Gemische im Reaktor im wesentlichen in Abwesenheit von Sauerstoff und Entfernen von bei der resultierenden Veresterungsreaktion gebildetem Wasser oder Alkohol;
(c) Abkühlen des resultierenden Reaktionsgemischs auf eine Temperatur unter 140°C, wenn die Menge an aus dem Reaktionsgemisch aus (b) entferntem Wasser oder Alkohol zumindest 95% der stöchiometrischen Menge für die Veresterung beträgt, und Zugabe von Trimethylpropan als primärem dreiwertigem Alkohol und gegebenenfalls eines primären zweiwertigen Alkohols, wobei auf Basis von Äquivalenten die Gesamtmenge an zweiwertigen Alkoholen und dreiwertigem Alkohol größer ist als die Menge an Säure, wobei der Molekulargewichtebereich der Säure, der zweiwertigen Alkohole und des dreiwertigen Alkohols aus (a) und (c) nicht über 100 liegt; und
(d) weiteres Erhitzen des Reaktionsgemischs und Entfernen von Wasser oder Alkohol, um ein Polyesterpolyol mit einer Hydroxylzahl von unter 650, einer Säurezahl von unter 3,5 und einer Hydroxylfunktionalität von zumindest 2,0 zu erhalten, mit der Maßgabe, daß der primäre zweiwertige Alkohol in zumindest einem der Schritte (a) und (c) zugegeben wird; daß das Verfahren in Abwesenheit von vierwertigen Alkoholen durchgeführt wird, sodaß Hydroxylendgruppen im Polyesterpolyol nicht sterisch gehindert sind; daß das Verfahren in Abwesenheit von N-Phenyldialkanolaminen durchgeführt wird; und daß der alleinige, im Verfahren eingesetzte, primäre, dreiwertige Alkohol Trimethylolpropan ist.

2. Verfahren zur Herstellung von Polyesterpolyolen nach Anspruch 1, umfassend das Speisen des Reaktors in Schritt (a) mit bis zu einem Mol des zumindest einen sekundären zweiwertigen Alkohols pro Mol Säure und 0,05 bis 0,65 Mol Trimethylolpropan pro Mol Säure; und die Zugabe von 0,10 bis 0,70 Mol Trimethylolpropan pro Mol Säure in Schritt (c).

3. Verfahren nach Anspruch 1 oder 2, bei dem der Molekulargewichtebereich nicht mehr als 50 beträgt.

4. Verfahren nach einem der Ansprüche 1 bis 3, bei dem der sekundäre zweiwertige Alkohol Dipropylenglykol ist und die Säure Adipinsäure ist.

**5.** Verfahren nach einem der Ansprüche 1 bis 4, bei dem das Polyesterpolyol dadurch gekennzeichnet ist, daß es an beiden Enden des Polyesterpolyolmoleküls im wesentlichen die gleiche Reaktivität mit Diphenylmethan-4,4'-diisocyanat aufweist.

**6.** Verfahren nach einem der Ansprüche 1 bis 5, worin der primäre zweiwertige Alkohol Cyclohexandimethanol ist.

**7.** Verfahren zur Herstellung eines Polyurethans, umfassend die Herstellung eines Polyesterpolyols nach einem Verfahren nach einem der vorangegangenen Ansprüche und das anschließende Umsetzen des Polyesterpolyols mit einem Isocyanat oder Polyisocyanurat.

## Revendications

**1.** Méthode de fabrication de polyesters polyols incluant

(a) l'alimentation à un réacteur (i) d'au moins un acide dicarboxylique aliphatique ayant de 4 à 10 atomes de carbone, ou un ester de celui-ci, (ii) au moins un alcool dihydrique secondaire ayant 4 à 8 atomes de carbone, (iii) comme alcool trihydrique primaire du triméthylolpropane et optionnellement (iv) un alcool dihydrique primaire;
(b) le chauffage du mélange obtenu en (a) dans ledit réacteur en l'absence substantielle d'oxygène et l'élimination de l'eau ou de l'alcool formé dans la réaction d'estérification résultante;
(c) lorsque la quantité d'eau ou d'alcool éliminée du mélange réactionnel de (b) est au moins 95% de la quantité stoechiométrique pour l'estérification, le refroidissement du mélange réactionnel résultant à une température inférieure à 140°C et l'ajout comme alcool trihydrique primaire de triméthylolpropane et optionnellement d'un alcool dihydrique primaire, la quantité totale des alcools dihydriques et de l'alcool trihydrique étant supérieure à la quantité d'acide sur la base des équivalents, l'intervalle des poids moléculaires desdits acides, des alcools dihydriques et de l'alcool trihydrique de (a) et (c) n'étant pas supérieur à 100; et
(d) le chauffage supplémentaire du mélange réactionnel et l'élimination de l'eau ou de l'alcool pour obtenir un polyester polyol ayant un nombre d'hydroxyl inférieur à 640, une valeur d'acide inférieure à 3,5 et une fonctionnalité hydroxyle d'au moins 2,0 avec les conditions que l'alcool dihydrique primaire soit ajouté dans au moins une des étapes (a) et (c); que la méthode soit mise en oeuvre en l'absence d'alcool tétrahydrique de sorte que les groupes terminaux hydroxyle dans le polyester polyol ne soient pas stériquement encombrés; que la méthode soit mise en oeuvre en l'absence de n-phényl dialcanolamines; et que le seul alcool trihydrique primaire employé dans la méthode soit le triméthylolpropane.

**2.** Méthode pour la fabrication de polyesters polyols selon la revendication 1, incluant à l'étape (a) l'alimentation au réacteur de jusqu'à une mole, par mole d'acide, d'au moins un alcool dihydrique secondaire et de 0,05 à 0,65 mole, par mole d'acide de triméthylolpropane; et dans l'étape (c) l'ajout de 0,10 à 0,70 mole, par mole d'acide, de triméthylolpropane.

**3.** Méthode selon la revendication 1 ou la revendication 2, dans laquelle l'intervalle des poids moléculaires n'est pas supérieur à 50.

**4.** Méthode selon l'une quelconque des revendications 1 à 3, dans laquelle l'alcool dihydrique secondaire est le dipropylène glycol, et l'acide est l'acide adipique.

**5.** Méthode selon l'une quelconque des revendications 1 à 4, dans laquelle le polyester polyol est caractérisé en ce qu'il a substantiellement la même réactivité au diphénylméthane-4,4'-diisocyanate à chaque extrémité de la molécule de polyester polyol.

**6.** Méthode selon l'une quelconque des revendications 1 à 5, dans laquelle l'alcool dihydrique primaire est le cyclohexane diméthanol.

**7.** Méthode de fabrication d'un polyuréthane incluant la fabrication d'un polyester polyol par une méthode selon l'une quelconque des revendications précédentes et ensuite la réaction du polyester polyol avec un isocyanate ou un polyisocyanurate.